# EUROPEAN PATENT APPLICATION

(11) **EP 1 746 126 A1**
(43) Date of publication of application: **24.01.2007**
(21) Application number: 06253827.7
(22) Date of filing: 21.07.2006
(51) Int. Cl.: C08K 3/00

(54) **UV blocking material, UV blocking visible selectively transmitting filter, visible selectively transmitted resin material, light source and lighting fixture**

(30) Priority: 22.07.2005 JP 2005212650
(71) Applicant: TOSHIBA LIGHTING & TECHNOLOGY CORPORATION, Shinagawa-ku, Tokyo 140-8640 (JP)
(72) Inventor: Kawakatsu, Akira, Toshiba Lighting & Technol.Corp., Shinagawa-ku, Tokyo 140-8640 (JP); Watanabe, Miho, Toshiba Lighting & Technol. Corp., Shinagawa-ku, Tokyo 140-8640 (JP)
(74) Representative: Jennings, Nigel Robin

(57) **Abstract**

A UV blocking material consists essentially of homologous zinc composite oxide particles each expressed by a general formula (ZnO)ₖIn₂O₃ (k is an odd number) and having a trigonal crystal structure.

## Description

The invention relates to a UV blocking material, a UV blocking visible selectively transmitting filter therewith, a visible selectively transmitting resin material, a light source and a lighting fixture.

As is well known, on a surface of glass that is used in a window of a construction such as a house and a building, a vehicle such as a train, an automobile and an aircraft, or a refrigerating or freezing showcase, in general, a resinous film that reflects or absorbs both of infrared ray and UV-ray is adhered. This is because a temperature rise due to infrared ray is alleviated or various constructions, foods and other articles are inhibited from deteriorating due to UV-ray.

Conventionally, in a film material that cuts, for instance, UV-ray, a zinc oxide (ZnO) base material has been mainly used. However, in a ZnO blocking film that is used to cut UV-ray, a wavelength that is cut is substantially 380 nm or less. However, a longer wavelength side than the above is preferable to be cut. For instance, a ZnO blocking film doped with Bi or In is proposed. On the other hand, as a film material that cuts heat ray, for instance, indium oxide powder doped with tin (ITO powder) is used; however, a material that simultaneously cuts UV-ray in the range of 300 to 400 nm is hardly known. As a material that simultaneously cuts UV-ray and infrared ray, for instance, ZnO: Al and hexagonal composite oxides of (ZnO)ₖIn₂O₃ (k = 2 to 20) (k: even number) have been proposed (Jpn. Pat. Appln. KOKAI Publication No. 2003-336034). However, in the film materials, UV-ray is cut only to the same extent as ZnO or, owing to a shift of a cutting wavelength toward a little bit shorter wavelength side, at a little deteriorated level.

Furthermore, as is well known, in a fluorescent lamp as a light source, which uses UV-ray (254 nm) of mercury bright lines to emit visible light, a spectrum of mercury bright lines is present even in near UV-ray (365 nm) and visible ray (405 nm). Here, phototaxis curves of main insects have a maximum in the proximity of 370 nm; accordingly, in an existing low insect-attracting fluorescent lamp, a UV blocking film that cuts a wavelength of 380 nm or less is coated. Many materials of such UV blocking films use ZnO and TiO₂ from a viewpoint of the durability and cost.

Now, a distribution of the phototaxis curve of insects extends up to 550 nm on a longer wavelength side. While on the other hand, the cutting wavelength of a cutting material such as ZnO is substantially 380 nm or less; accordingly, cutting on a longer wavelength side is preferable. Furthermore, since a fluorescent lamp is used for lighting, 410 nm that is a lower limit wavelength of human visibility curve or more is not preferable to cut from viewpoints of the lamp efficiency and the color rendition property. However, since there is no suitable inorganic material that satisfies the conditions, a plastic film or tube or an organic compound is put into practical use to cut approximately 410 nm.

Now, when a plastic film or tube or an organic compound is used, since these are covered on an outer tube of a fluorescent lamp, the manufacture becomes complicated and the cost goes up. Furthermore, there is a problem of the durability owing to the heat resistance and deterioration due to UV-ray. Still furthermore, although it is disclosed that an In-doped ZnO film can cut to a longer wavelength side, there are problems in the manufacturing cost and the number of steps.

An object of the present invention is to provide a UV blocking material that can shift a wavelength that cuts UV-ray toward a longer wavelength side than ZnO to improve the UV cutting property, a UV blocking visible selectively transmitting filter therewith, a visible selectively transmitting resin material, a light source and a lighting fixture.
(1) A UV blocking material of the invention consists essentially of homologous zinc composite oxide particles each expressed by a general formula: (ZnO)ₖIn₂O₃ (k is an odd number) and having a trigonal crystal structure. According to the invention, by consisting essentially of particles of homologous zinc composite oxide that is expressed with a general formula: (ZnO)ₖIn₂O₃ (k: odd number) and has a trigonal crystal structure, a UV blocking material that has a 50% transmittance wavelength on a shorter wavelength absorption edge side in the 400 to 430 nm, that is, a UV cutting wavelength shifted toward a longer wavelength side than ZnO, thereby improving the UV cutting property and possessing the heat line cutting property can be obtained.
(2) In addition, in the UV blocking material of the invention, In of the homologous zinc composite oxide particles is partially substituted by any one of La, Ga and Al. According to the invention, other than having the same advantage as that of the (1), since, in homologous zinc composite oxide particles, In is partially substituted by any one of La, Ga and Al, the UV-cutting capability is slightly deteriorated. However, the transmittance of visible ray in the wavelength range of 400 to 500 nm can be improved.
   The present inventors variously studied to overcome problems when a ZnO film doped with In is used in a fluorescent lamp. As a result, previously, the inventors have thought of a method of rendering powder of (ZnO)ₖIn₂O₃ an aqueous solution and forming a film thereof. However, when (ZnO)ₖIn₂O₃ is singularly used, although the cutting rate up to 410 nm is high, there are problems in that absorption in 500 nm or more is large to deteriorate light flux and when a particle diameter is large UV-ray slightly transmits. The inventors further studied by taking these points into consideration and found that, when a crystal structure of a homologous zinc composite oxide is optimized, a cutting wavelength can be shifted toward a longer wavelength side, and thereby the invention can be achieved.
(3) In the UV blocking material of the invention, the homologous zinc composite oxide particles are each surface-treated with an oxide of at least one kind of metal selected from Si, Al and Zr. According to the invention, in addition to having the same advantages as those of the (1), advantages such as surface protection such as inhibition of a reaction with CO₂, reduction of oxygen defects and inhibition of a photo-catalysis effect can be possessed.
(4) A UV blocking visible selectively transmitting filter of the invention is obtained by synthesizing the homologous zinc composite oxide particles through a solid phase reaction of a Zn or In compound followed by grinding, and film-forming resultant particles using an inorganic or organic binder. According to the invention, a UV blocking visible ray selectively transmitting filter having the same advantages as those of the (1) can be obtained.
(5) A light source of the invention comprises: a light-transmitting container; a UV blocking layer that is made of a UV blocking material consisting essentially of homologous zinc composite oxide particles each expressed by a general formula: (ZnO)ₖIn₂O₃ (k is an odd number) and has a trigonal crystal structure and formed on an inner or outer surface of the light-transmitting container; and luminous means disposed inside the container. Here, as luminous means, a constitution that can generate each of molecular (gaseous) emission due to discharge, excitation emission from a phosphor layer and stationary emission of an incandescent filament or an LED can be cited.
   According to the invention, on an interior or exterior surface of a light-transmitting container, a UV blocking layer made of a UV blocking material that is mainly made of homologous zinc composite oxide particles expressed by a general formula: (ZnO)ₖIn₂O₃ (k: odd number) and having a trigonal crystal structure is disposed, and the emission means is disposed inside the container. Thereby, UV-ray of 395 nm or less can be cut substantially 100% and visible light from 400 to 410 nm as well can be cut 60% or more. Accordingly, the insect attracting property can be made low and thereby insects tend to gather less than an existing light source. Furthermore, since the visible light in the range of 500 to 780 nm is hardly absorbed, the light flux is diminished less than a light source without a UV blocking layer of the invention.
(6) In the light source of the invention, particles made of ZnO particles, TiO₂ particles or a mixture thereof are blended in the UV blocking layer. According to the invention, since ZnO particles, TiO₂ particles or particles made of a mixture thereof is mixed in the UV blocking layer to fill in between (ZnO)ₖIn₂O₃ powders, the visible light transmittance becomes higher and UV-ray equal to or less than 380 nm is absorbed. Accordingly, when the oxide layer is coated on a base material, for instance, on an inner surface of a bulb, visible ray up to 410 nm and UV-ray can be more excellently cut and visible ray (450 to 780 nm) is hardly absorbed. As a result, there is an advantage in that the light flux of the light source is not so much reduced in comparison with the case where a film is not coated.
(7) In the light source of the invention, k in the general formula: (ZnO)ₖIn₂O₃ of the UV blocking material is 5. Here, the larger the [k] that is an odd number is, the higher the visible light transmittance is. However, when [k] exceeds 7, since the composite oxide can be produced with only difficulty and the UV blocking characteristics as well tend to vary, the [k] is preferably 5. According to the invention, when k in a general formula: (ZnO)ₖIn₂O₃ of the UV blocking material is set at 5, there are advantages in that the transmittance to visible light from 500 to 780 nm is high and uniform and light emitted from luminous means is not absorbed. However, depending on specifications of the visible light transmitting characteristics and the cutting wavelength, k, without being limited to 5, may be an odd number such as 3 or 7.
(8) A visible selectively transmitting resin material of the invention is obtained by synthesizing the homologous zinc composite oxide particles through a solid phase reaction of a Zn or In compound followed by grinding, and mixing resultant particles with resin followed by molding. According to the invention, a visible ray selectively transmitting resin material having the same advantages as those of the (1) can be obtained.
(9) A lighting fixture of the invention includes any one of light sources of the (5) through (7). According to the invention, a lighting fixture that, without largely deteriorating the lighting efficiency, can suppress irradiation of UV-ray and thereby has low insect attracting effect can be provided.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a descriptive diagram schematically showing a molecular structure of a UV blocking member according to the invention;
FIG. 2 is a characteristic diagram showing relationship between wavelength and diffuse reflectance of homologous zinc composite oxide particles that constitute a UV blocking member according to the invention and a conventional example;
FIGS. 3A through 3C are descriptive diagrams of a fluorescent lamp according to a second embodiment;
FIG. 4 is a characteristic diagram showing relationship between spectral radiation intensity and the transmittance of a lamp in each of the second embodiment and a comparative example;
FIG. 5 is a descriptive diagram of a lighting fixture according to a third embodiment;
FIG. 6 is an enlarged sectional view of an essential portion of FIG. 5;
FIG. 7 is a characteristic diagram showing an XRD measurement result of a UV blocking material according to the first embodiment;
FIG. 8 is a characteristic diagram showing an XRD measurement result of a UV blocking material according to the second embodiment;
FIG. 9 is a schematic front view of a metal halide lamp according to a fourth embodiment;
FIG. 10 is an enlarged partial sectional view of an essential portion of the metal halide lamp according to the fourth embodiment;
FIG. 11 is a descriptive diagram of a metal halide lamp according to a fifth embodiment;
FIGS. 12A and 12B are descriptive diagrams of a metal halide lamp according to a sixth embodiment; and
FIG. 13 is a descriptive diagram of a metal halide lamp according to a seventh embodiment.

In what follows, embodiments of the invention will be described with reference to the drawings.

The invention can be used as a UV blocking material, a UV cutting film and a UV cutting sheet in a wide range of fields such as food-related places such as breweries, candy producers, super markets, convenience stores and show cases of food floor in department stores, clothes-related places such as clothing shops, show windows and clothing section in department stores, art museums and museums where academically important articles are displayed, and paper-related places that handle many paper products such as printing factories, paper factories, book sellers, stationery shop and offices.

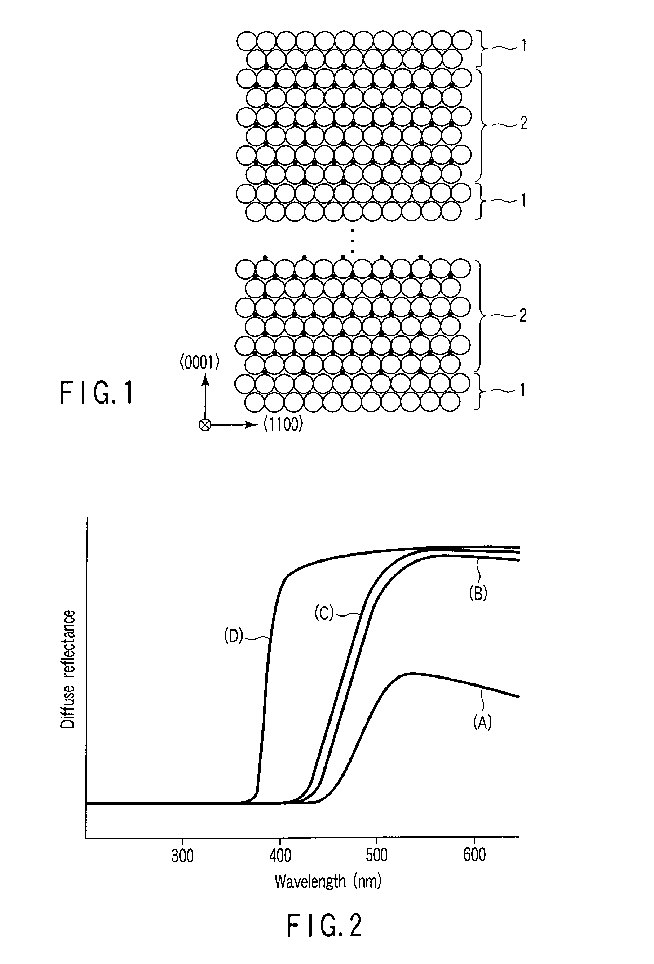

In the invention, a UV blocking material has, as a main component thereof, homologous zinc composite oxide particles each expressed with a general formula: (ZnO)ₖIn₂O₃ (k: odd number) and has a trigonal crystal structure. Here, in the formula, k is most preferably 5 but may be an odd number such as 3 or 7. FIG. 1 is a diagram schematically showing a molecular structure of a UV blocking material (a case where k in the formula is 5) according to the invention, an InO₂⁻ layer 1 and a (ZnO)₅⁺ layer 2 being sequentially layered. Furthermore, in the (ZnO)₅⁺ layer 2, a layer of Zn atoms and a layer of O atoms are alternately layered. FIG. 2 shows characteristic diagrams showing relationships between wavelength and the diffuse reflectance when k in the formula is 3 (curve (A) in the drawing), 5 (curve (B) in the drawing) and 7 (curve (C) in the drawing). A curve (D) in the drawing shows a case where an existing ZnO is used. From FIG. 2, it is obvious that, in the case of the present invention, in comparison with the case where ZnO is used, a UV cutting wavelength can be shifted more toward a longer wavelength side.

In homologous zinc composite oxide particles according to the embodiment, In can be partially substituted with any one of La, Ga and Al. Here, a little amount of Sn may be present. Furthermore, when homologous zinc composite oxide particles, after being synthesized due to a solid phase reaction of a Zn or In compound, is ground and the ground particles are layered with an inorganic or organic binder, a visible selectively transmitting filter can be obtained. Still furthermore, when the homologous zinc composite oxide particles, after being synthesized due to a solid phase reaction of a Zn or In compound, are ground and the ground particles, after surface coating with a metal oxide, are mixed with a resin followed by molding with a die, a visible selectively transmitting resin member such as a UV cutting film or a UV cutting sheet can be obtained. The metal oxide may be an oxide of at least one kind of metal selected from Si, Al and Zr.

In the invention, as a light source, for instance, an incandescent lamp, an HID lamp and a fluorescent lamp can be cited without being limited thereto.

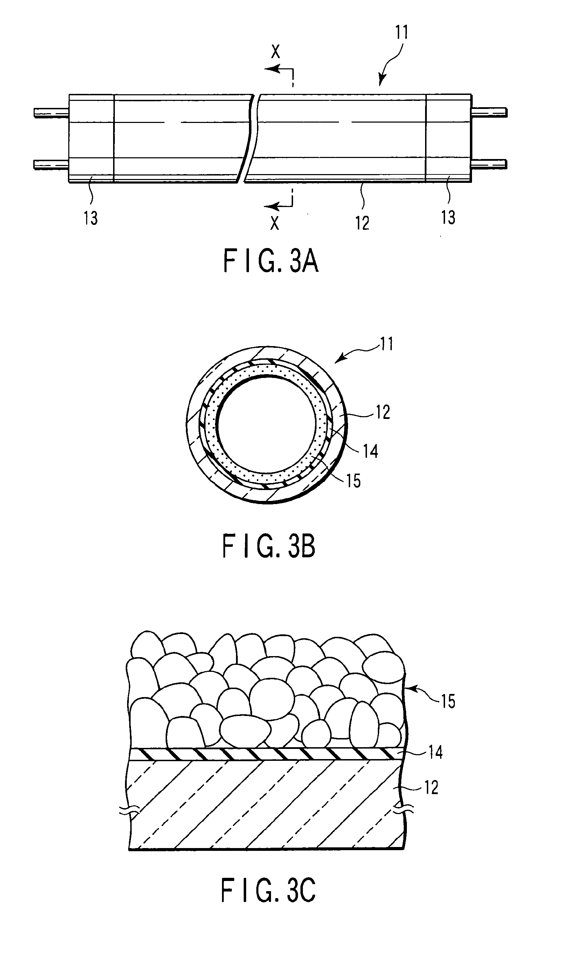

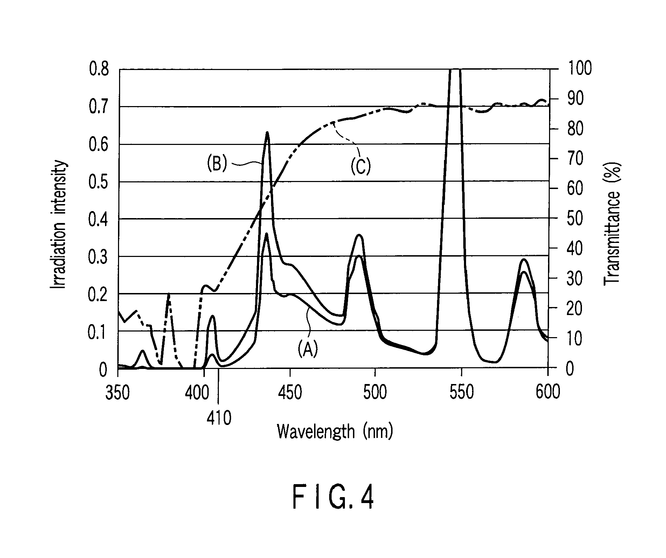

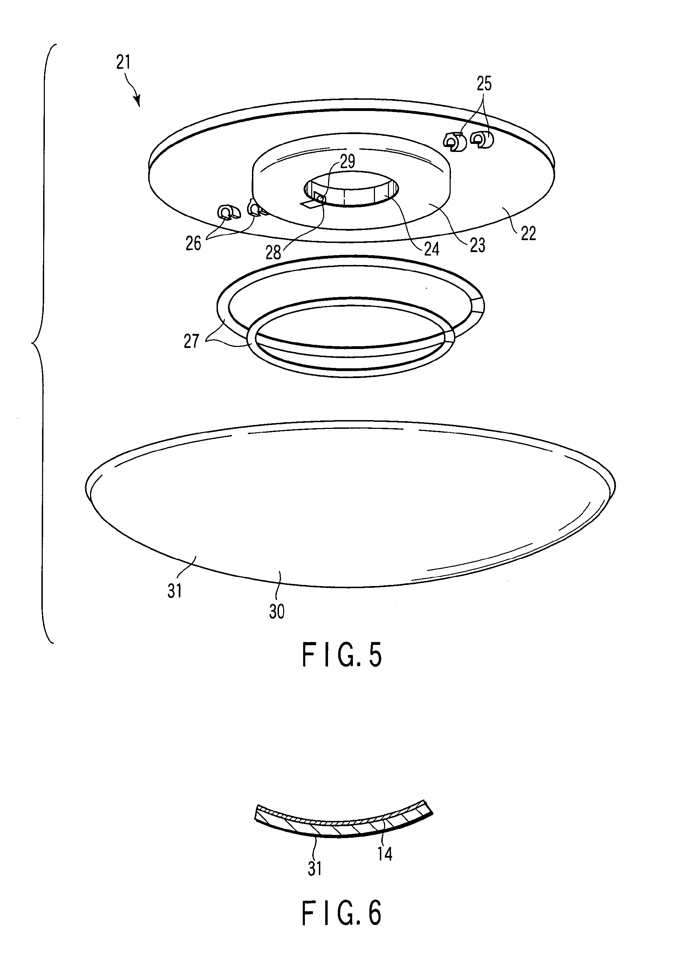

FIG. 3A shows an entire diagram showing partially truncating a fluorescent lamp (light source) according to one embodiment of the invention. FIG. 3B shows a sectional view taken along the line X-X in FIG. 3A. FIG. 3C is a schematic diagram showing by expanding a bulb section of the fluorescent lamp of FIG. 3A.

A fluorescent lamp 11 includes a straight-pipe glass bulb 12 and caps 13 and 13 disposed at both ends of the bulb 12. As shown in FIGS. 3B and 3C, a UV cutting layer 14 as a UV blocking layer and a phosphor layer 15 are formed sequentially on an inner surface of the bulb 12. Here, the UV cutting layer 14 is mainly formed of homologous zinc composite oxide particles expressed with a general formula: (ZnO)ₖIn₂O₃ with a film thickness in the range of 0.1 to 5 µm and more preferably in the range of 0.5 to 3 µm. Now, k in the formula is for instance 5. The phosphor layer 15 is formed by coating a plurality of phosphors of three-wavelength emission type stipulated in JIS Z 9112.

The (ZnO)ₖIn₂O₃ is a material that has an absorption edge shifted on a longer wavelength side than ZnO. In particular, a composition of k = 5 is smooth in the transmittance in the visible region of 500 to 780 nm and does not absorb light emitted from the phosphor. Furthermore, as the oxide layer, a layer in which homologous zinc composite oxide particles each expressed by (ZnO)ₖIn₂O₃ and having a trigonal crystal structure, that is, (ZnO)ₖIn₂O₃ particles are mixed with particles made of ZnO particles, TiO₂ particles or a mixture thereof and having a particle diameter in the range of 10 nm to 1.0 µm can be cited. When this oxide layer is used, particles of ZnO particles or TiO₂ particles are buried between (ZnO)ₖIn₂O₃ particles, without largely deteriorating the visible light transmittance, UV-ray of 380 nm or less can be effectively absorbed. Accordingly, for instance, when a (ZnO)₅In₂O₃ film is coated on an inner surface of the bulb 12, visible and UV-ray up to 410 nm can be cut and the visible light (450 to 780 nm) is hardly absorbed. As a result, the light flux of the fluorescent lamp is not so much reduced in comparison with a case where the UV cutting layer is not coated.

### (First Embodiment)

A UV blocking material according to a first embodiment of the invention includes, as a main component, homologous zinc composite oxide particles each expressed with a general formula: (ZnO)₅In₂O₃ and has a trigonal crystal structure. The UV blocking material was produced as shown below. That is, in the beginning, predetermined amounts of powder of ZnO (average particle diameter: substantially 1 µm) and powder of In₂O₃ (average particle diameter: substantially 50 nm) were mixed at an In addition amount of, for instance, 10 mass percent and thereby a mixture was prepared. Then, the mixture was subjected to a solid phase reaction in a crucible by heating at 900°C or more, for instance, 1300°C, in air for 5 hours, and thereby powder of UV blocking material having a particle diameter of substantially 500 nm was obtained.

When the obtained powder was subjected to X-ray diffractometry, a main component was confirmed to be (ZnO)₅In₂O₃. Furthermore, when the reflectance characteristics were measured, it was confirmed that a 50% transmittance wavelength on a short wavelength absorption edge side of the powder sample is in the range of 400 to 430 nm, and the powder had excellent UV cutting property and heat line cutting property. When the powder is actually used as a UV blocking material, the powder obtained according to the above-mentioned producing method is ground to a predetermined particle diameter, followed by classifying, as needs arise, further followed by applying appropriate surface treatment. Furthermore, when the powder is used as a coating material, the powder is dispersed in an organic or aqueous dispersion to use.

Thus, according to the UV blocking material according to the first embodiment, such advantages that the 50% transmittance wavelength on a short wavelength absorption edge side can be set in the range of 400 to 430 nm, a UV cutting wavelength can be shifted toward a longer wavelength side than ZnO and thereby the UV cutting property is improved and the heat line cutting property can be possessed could be obtained.

A particle diameter of the UV blocking material according to the first embodiment is not particularly restricted; however, from the optical characteristics point of view, the average particle diameter is preferably in the range of 10 nm to 5 µm and most preferably in the range of 100 nm to 1 µm.

### (Second Embodiment)

A fluorescent lamp as a light source according to a second embodiment of the invention, as shown in FIGS. 3A, 3B and 3C, includes a straight-pipe soda-lime glass bulb (light-transmitting container) 12 and metal caps 13 and 13 disposed at both ends of the bulb 12. A UV cutting layer 14 having a film thickness of substantially 1 µm and a phosphor layer 15 are formed sequentially on an inner surface of the bulb 12. Here, the UV cutting layer 14 is mainly made of a general formula: (ZnO)₅In₂O₃. In the phosphor layer 15, a plurality of phosphors of three wavelength emission type stipulated in JIS Z 9112 is coated, in which at least three monochromatic lights having wavelengths of substantially 450 nm (blue), 540 nm (green) and 610 nm (red) are combined. As a result, a fluorescent lamp 11 illuminates daylight white color of substantial color temperature of 5000 K.

The fluorescent lamp 11 was produced as shown below. That is, in the beginning, to a weight of ZnO having an average particle diameter of 30 nm, In₂O₃ was blended at a ratio of 10%, followed by sintering at a temperature in the range of 1100 to 1200°C, and thereby (ZnO)₅In₂O₃ powder having a particle diameter of substantially 500 nm was generated. Then, after an aqueous solution was formed from the powder, an aqueous solution of ZnO/TiO₂ having a particle diameter of substantially 50 nm was added to (ZnO)ₖIn₂O₃ at a ratio of 20 mass percent, followed by coating on an inner surface of the bulb 12. Subsequently, after the coating layer was dried, three-wavelength phosphor was coated, followed by applying baking, sealing and exhausting processes, and thereby a fluorescent lamp (type name: FL20SSEXD) where on an inner surface of the bulb 12 a UV cutting layer 14 having a film thickness of 1 µm and a phosphor layer 15 are sequentially formed was prepared. Furthermore, as a comparative example 1, a fluorescent lamp in which a UV cutting layer according to the embodiment was not formed was prepared as well.

In the second embodiment, it goes without saying that the UV cutting layer 14 can be formed on an outer surface of the bulb 12. However, in order to reduce an amount of UV-ray irradiated on the bulb 12 to inhibit a glass component from deteriorating, it is better to coat on an inner surface of the bulb 12.

The fluorescent lamp according to the second embodiment can cut substantially 100% of UV of 395 nm or less and 60% or more of visible light in the range of 400 to 410 nm; accordingly, the insect attracting property can be lowered. As a result of an outdoor evaluation test, it was confirmed that the lamp according to the second embodiment attracts insects less than a fluorescent lamp. Furthermore, since the UV cutting layer according to the embodiment hardly absorbs visible light in the range of 500 to 780 nm, the light flux is less lowered than the fluorescent lamp according to the comparative example. Still furthermore, since there is no need to cover an external surface of the fluorescent lamp with a plastic or resinous tube when a lamp is replaced, fixing can be readily carried out.

With an integrating sphere for measuring light flux, the light flux and spectral radiant flux of these lamps were measured. FIG. 4 is a characteristic diagram showing relationship of spectral radiation intensity and the transmittance of lamps according to the present embodiment and the comparative example. In FIG. 4, a curve (A) shows a case of a fluorescent lamp according to the invention, a curve (B) shows a case of a fluorescent lamp according to the comparative example 1, and a curve (C) shows a case of comparative example 2 where on an external surface of the same fluorescent lamp as that of comparative example 1 a UV cutting resin tube in which ZnO particles are blended is covered. In the fluorescent lamp where a UV cutting layer according to the embodiment is formed, the light flux was 96.6% relative to that of the comparative example 1. Furthermore, when, based on the spectral radiation of the comparative example, the light transmittance of the oxide layer according to the invention was calculated, it was confirmed that UV-ray on a shorter wavelength side than 395 nm was cut substantially 100% and the cutting rates at 400 nm, 410 nm and 500 nm, respectively, were 75%, 65% and 4.8%.

Furthermore, the fluorescent lamp according to the invention could cut substantially 100% at 370 nm that shows a maximum value of the phototaxis curve of insects and at 395 nm or less and could largely cut a visible light region of 410 nm where the phototaxis curve of insects remains. When an insect attracting test was carried out, with a mass of insects attracted to the fluorescent lamp according to the comparative example 1 assigned to 100%, a weight of insects attracted by the fluorescent lamp according to the invention was 67%. That is, it was confirmed that the insect attracting rate was lowered.

### (Third Embodiment)

A lighting fixture according to a third embodiment of the invention has a configuration such as shown in FIGS. 5 and 6. Here, FIG. 5 is an exploded perspective view of the lighting fixture and FIG. 6 is an enlarged sectional view of an essential portion of FIG. 5. The embodiment relates to a lighting fixture that uses a transmissive shade (cover) on an inner surface of which a UV cutting layer mainly made of a UV blocking material is formed.

A lighting fixture 21 has a hook ceiling provided on a ceiling and a fixture body 22 directly fitted to a ceiling portion with an adapter attached to the hook ceiling. The fixture body 22 has a disc shape. A shoulder portion 23 large in a thickness dimension is attached to a center portion of the fixture body 22. The adapter (not shown in the drawing) is inserted in a center portion of the shoulder portion 23 and a mechanically connected circular opening 24 is disposed at a center portion of the shoulder portion 23.

Furthermore, two lamp sockets 25 and two lamp holders 26 are disposed in a peripheral portion of the fixture body 22. Two luminous tubes 27 of circular fluorescent lamps that become a light source, for instance, luminous tubes 27 of 32 W and 40 W fluorescent lamps different in outer diameter from each other, are concentrically disposed so as to surround the shoulder portion 23. The luminous tubes 27 are electrically and mechanically connected to the lamp sockets 25 and mechanically supported by the lamp holders 26. Furthermore, a socket 28 is disposed to a portion of the opening 24, a lamp 29 such as a baby tube being attached to the socket 28.

A shade 30 as a lighting optical component is detachably attached to the fixture body 22 so as to cover the fixture body 22 and downward and sideward of members attached to the fixture body 22. The shade 30 is provided with a base 31 that is made of a light-transmitting material such as glass or resin and formed into a curved surface smoothly swelling downward. A UV cutting layer 14 made of a material and having a film thickness the same as that of the second embodiment is formed on an inner surface of the base 31.

According to the third embodiment, since the UV cutting layer 14 is disposed on an inner surface of the base 31, similarly to the foregoing embodiment, without largely deteriorating the lighting efficiency, irradiation of UV-ray can be suppressed and thereby a lighting fixture 21 having low insect attracting effect can be provided. Furthermore, in this configuration, various kinds of general light sources such as fluorescent lamps can be used; accordingly, versatility can be improved.

In the third embodiment, the UV cutting layer 14 is disposed film-like, that is, layer-like on an inner surface of the base 31. However, the configuration is not restricted thereto. For instance, the UV blocking material can be mixed in a resin that constitutes the base 31, and thereby a UV cutting layer can be integrally formed. A mixing ratio at this time is preferably in the range of 5 to 30 mass percent to a total resin material. However, depending on the specification, a mixing ratio outside of this range can be used.

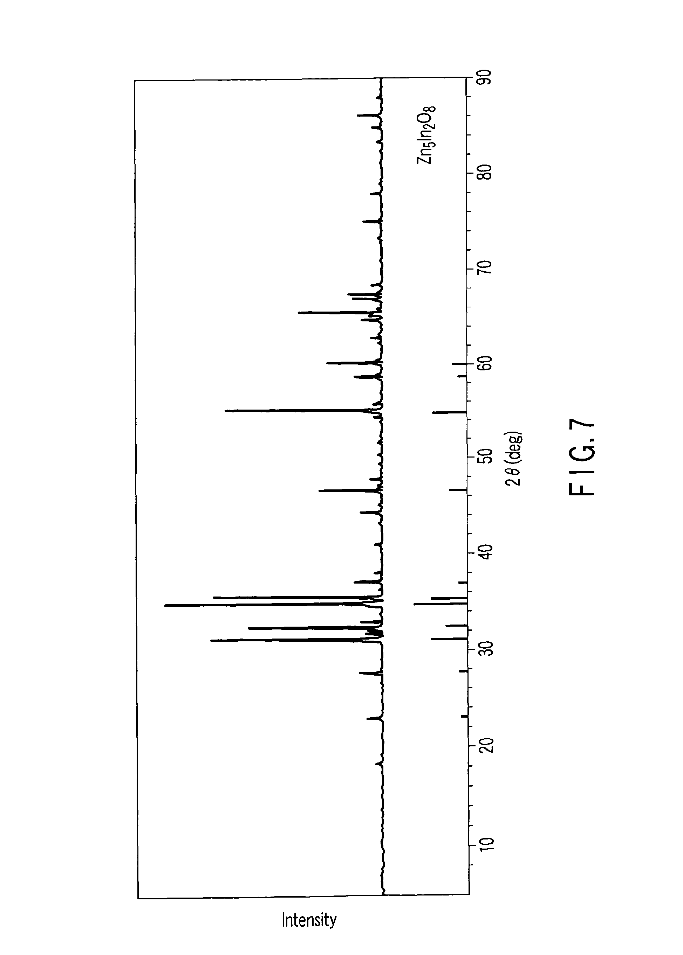

FIG. 7 illustrates two graphs: an upper one shows an XRD measurement result of a UV blocking material according to the first embodiment of a UV blocking material according to the first embodiment, whereas a lower one shows an XRD pattern of (ZnO)₅In₂O₃ having a trigonal crystal structure. In this characteristic diagram, the horizontal axis indicates 2θ and the vertical axis indicates the intensity. As can be clearly confirmed from FIG. 7, the UV blocking material according the first embodiment was (ZnO)₅In₂O₃ (,which was the same as Zn₅In₂O₈,) having a trigonal crystal structure.

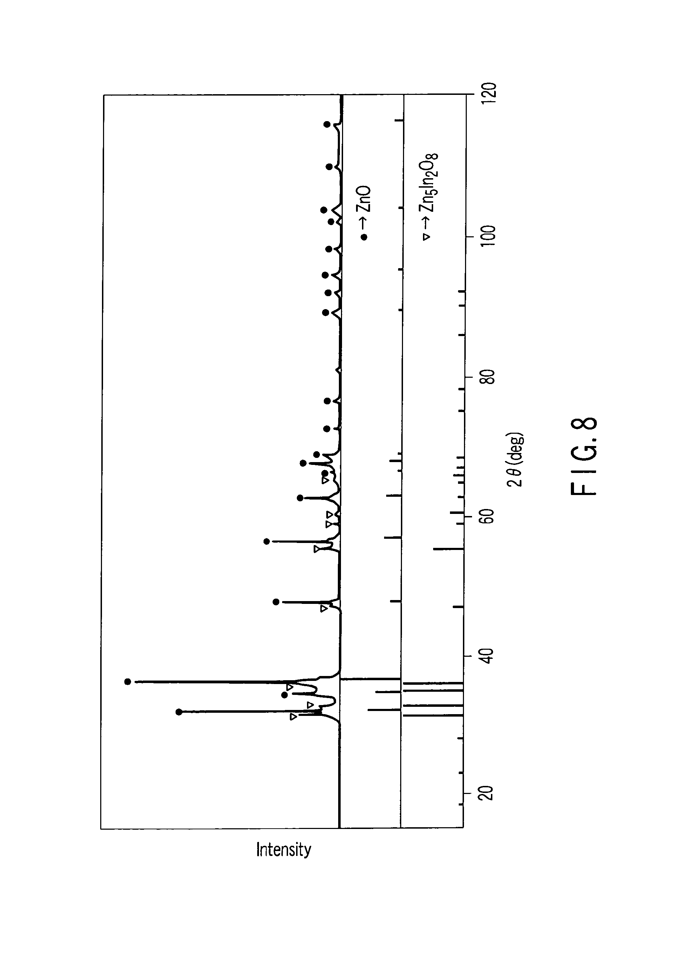

FIG. 8 illustrates three graphs: an upper one shows an XRD measurement result of a UV blocking material according to the first embodiment, in which ZnO was mixed, whereas middle and lower ones show XRD patterns of ZnO and (ZnO)₅In₂O₃, respectively. In this characteristic diagram, the horizontal axis indicates 2θ and the vertical axis indicates the intensity. As can be clearly understood from FIG. 8, the UV blocking material was one in which ZnO and (ZnO)₅In₂O₃ are mixed together. It should be noted that the UV blocking material was according to this embodiment had a mixture ratio of 10 to 20% by weight of (ZnO)₅In₂O₃, and the rest of zinc oxide (ZnO).

### (Fourth Embodiment)

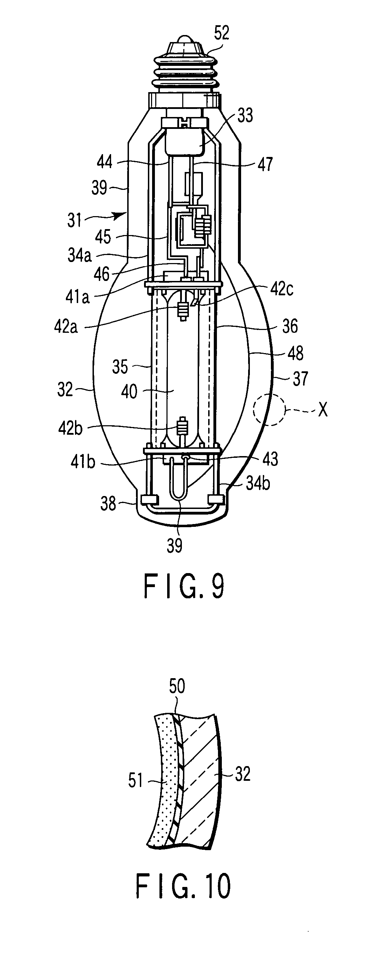

FIG. 9 shows a schematic front view of a highpressure metal vapor discharge lamp (metal halide lamp) as a light source according to a fourth embodiment of the invention. FIG. 10 is a partially enlarged sectional view showing an essential portion X of

### FIG. 9.

In a metal halide lamp 31, a stem 33 is sealed to one end portion of an external tube bulb 32 made of light-transmitting hard glass such as borosilicate glass. The stem 33 supports a quartz luminous tube 35 and a shroud (light-transmitting hollow tube) 36 that surrounds the luminous tube 35 through support members 34a and 34b.

The external tube bulb 32 is formed into a so-called BT type that has a swelling portion 37 at a center portion, a top portion 38 clogged on a lower portion side and a neck portion 39 on an upper side. Inside of the external tube bulb 32, a nitrogen gas is sealed in. The luminous tube 35 has crush seal portions 41a and 41b at both end portions of the luminous tube bulb 40 made of straight tube type high silica glass (quartz glass) that constitutes a light-transmitting air-tight container and, inside of a luminous tube bulb 40, a pair of primary electrodes 42a and 42b made of molybdenum (Mo) or tungsten (W) are sealed. In the proximity of one primary electrode 42a, an auxiliary electrode 42c is disposed.

Inside of each of the crush seal portions 41a and 41b, as a lead member, a ribbon-like metal foil 43 made of Mo is hermetically sealed. Inside of the luminous tube bulb 40, mercury, argon as a starting-up rare gas and an iodide of sodium, scandium or indium as a metal halide are encapsulated. The shroud 36 is made of highly light transmitting silica glass, has a cylindrical shape opened at upper and lower end portions and is disposed separated with a predetermined distance from the internal luminous tube 35. A lead wire 44 of the stem 33 is electrically connected through an electric supply line 45 and an external lead wire 46 to one main electrode 42a and the other lead wire 47 of the stem 33 is electrically connected through an electric supply line 48 made of a slender wire disposed curved so as to go apart from the luminous tube bulb 40 and an external lead wire 49 to the other main electrode 42b. In the drawing, a reference numeral 52 shows a metal cap.

On an inner wall surface of the outer tube bulb 32, as shown in FIG. 10, through a UV cutting layer 50 as a UV blocking layer, a phosphor layer 51 is formed. The UV cutting layer 50 is mainly made of homologous zinc composite oxide particles expressed by a general formula: (ZnO)ₖIn₂O₃ where k is for instance 5. The UV cutting layer 50 is formed in such a manner that (ZnO)ₖIn₂O₃ and at least any one of super-particles of SiO₂, Al₂O₃ and CeO form together a suspension, the suspension is coated by means of a flow coating method or a spray coating method, followed by drying and heating. A reason why the UV cutting layer 50 is disposed between the external tube bulb 32 and the phosphor layer 51 is that UV-ray which is excitation light of the phosphor layer 50 may not be reduced and, since (ZnO)ₖIn₂O₃ has the reflectance of substantially 5 to 20% in the wavelength region, the UV-ray is returned to the phosphor layer 51 to allow reabsorbing. A reason why at least any one of super-particles of SiO₂, Al₂O₃ and CeO are mixed with (ZnO)ₖIn₂O₃ is to control the transmittance of visible light of 410 nm or more and to improve the heat resistance.

As mentioned above, the metal halide lamp 31 according to the fourth embodiment has such a configuration as that the stem 33 is sealed at one end portion of the external tube bulb 32, the stem 33 is allowed to support through the support members 34a and 34b the quartz luminous tube 35 and the shroud 36, the luminous tube 35 has crush seal portions 41a and 41b at both end portions of a straight silica glass (quartz glass) luminous tube bulb 40 that forms a light-transmitting air-tight container, inside of the luminous tube bulb 40 a pair of main electrodes 42a and 42b made of molybdenum or tungsten are sealed, inside of the luminous tube 40 mercury, metal halide and argon are encapsulated, and on an inner wall surface of the bulb 32 through a UV cutting layer 50 mainly made of homologous zinc composite oxide particles expressed by (ZnO)ₖIn₂O₃, a phosphor layer 51 is formed.

A spectral distribution characteristic diagram of a thus configured 400 W fluorescent metal halide lamp is as shown in FIG. 10. In FIG. 10, curves (a), (b) and (c), respectively, show a case where (ZnO)ₖIn₂O₃ (k = 5) is used, a case where (ZnO)ₖIn₂O₃ (k = 5) and ZnO and TiO₂ are mixed and used and a case where an existing metal halide lamp is used. From FIG. 10, it is found that according to the lamp of the invention, blue light of 410 nm or less and UV-ray of 380 nm or less are reduced. Furthermore, relative to the transmittance of a lamp according to the comparative example, the transmittance in the visible region of 550 to 780 nm is 90% or more, that in the UV region of 380 nm or less is 25% or less, that at 400 nm is 50% or less and that at 410 nm is 65% or less. In this manner, when the UV radiation and radiation in the range of 380 to 410 nm, which hardly affects the human visibility, are reduced, rather than a case where only the UV-ray region of 380 nm or less is reduced, the insect attracting property based on the phototaxis of light of insects can be suppressed, and a low insect attracting metal halide lamp can be obtained.

### (Fifth Embodiment)

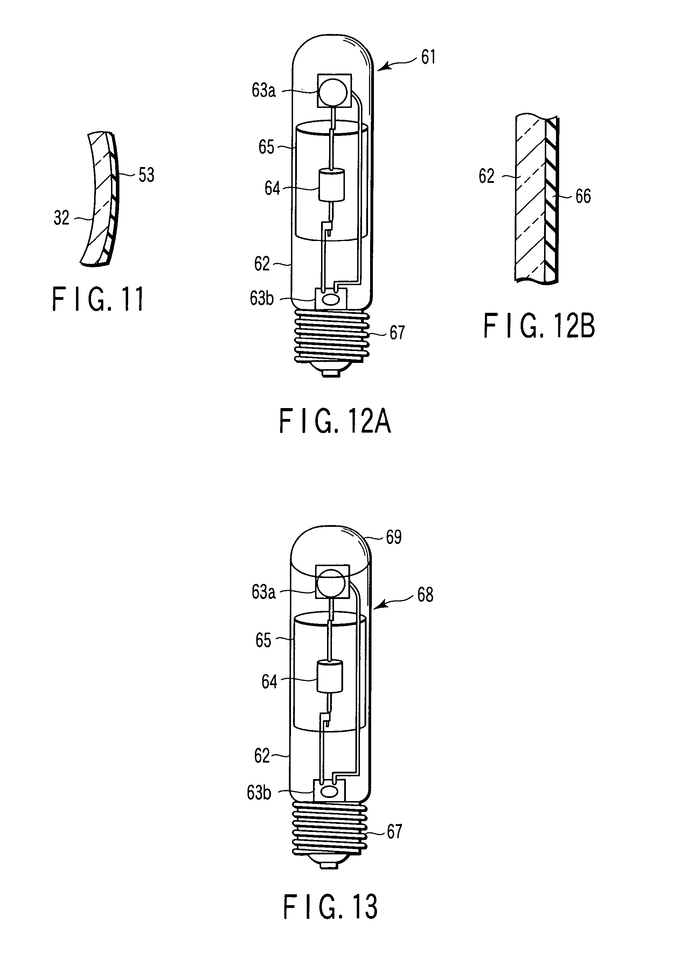

A fundamental configuration of a metal halide lamp 31 according to a fifth embodiment of the invention is identical to that shown in FIG. 9 except that only an essential portion X of FIG. 9 is configured as shown in FIG. 12. That is, on an outer surface of the external tube bulb 32, a UV cutting layer 53 as a UV blocking layer is formed. The UV cutting layer 53 is mainly made of homologous zinc composite oxide particles expressed by a general formula: (ZnO)ₖIn₂O₃ where k is for instance 5. The UV cutting layer 53 is formed in such a manner that (ZnO)ₖIn₂O₃ and super-particles of ZnO, Ti₂O or a mixture of ZnO and Ti₂O together form a suspension, the suspension is coated by means of a dip coat method or a spray coating method, followed by drying and heating. A reason why super-particles of ZnO, Ti₂O or a mixture of ZnO and Ti₂O are mixed with (ZnO)ₖIn₂O₃ is to allow effectively absorbing UV-ray of 380 nm or less and improving the adhesiveness.

Spectral distribution characteristics of a thus configured metal halide lamp are as shown in FIG. 11. The metal halide lamp has the same advantages as those of the metal halide lamp according to the fourth embodiment.

### (Sixth Embodiment)

A metal halide lamp 61 according to a sixth embodiment of the invention is as shown in FIGS. 13A, FIG. 13A being a schematic front view of the lamp 61, FIG. 13B being a sectional view of an essential portion X of FIG. 13A.

The metal halide lamp 61 is provided with a sealed transparent envelope 62. In the envelope 62, a quartz metal halide luminous tube 64 at both ends of which a pair of main electrodes 63a and 63b are sealed is disposed. Inside of the envelope 62, a transparent glass shroud 65 is disposed so as to surround the luminous tube 64. On an outer surface of the shroud 65, as shown in FIG. 13B, a UV cutting layer 66 is formed. The UV cutting layer 66 is mainly made of homologous zinc composite oxide particles expressed by a general formula: (ZnO)ₖIn₂O₃ where k is for instance 5. The UV cutting layer 66 is formed in such a manner that (ZnO)ₖIn₂O₃ and super-particles of SiO₂, Al₂O₃, CeO or Ti₂O together form a suspension, the suspension is coated by means of a dip coat method or a spray coating method, followed by drying and heating. A not-shown support member supports the luminous tube 64 and the shroud 65. Inside of the envelope 62, nitrogen gas is encapsulated. Inside of the luminous tube bulb 64, mercury, argon as a starting-up rare gas and an iodide of sodium, scandium or indium as a metal halide are encapsulated. In the drawing, a reference numeral 67 denotes a metal cap.

According to the metal halide lamp 61 of the sixth embodiment, since the UV cutting layer 66 is formed on an outer surface of the shroud 65, by making use of the insect attracting property based on the phototaxis property of light of insects in an outdoor facility, the insect attracting rate can be reduced. The metal halide lamp of FIG. 13 has the same spectral distribution characteristics as those shown in FIG. 11 and the same advantages as those of the metal halide lamp according to the fourth embodiment.

The invention is not restricted to the embodiments as they are. When it is actually applied, in a range that does not deviate the gist thereof, constituent elements can be modified and embodied. Specifically, in the embodiments, a case where, in a general formula: (ZnO)ₖIn₂O₃ (k is an odd number), k is 5 is described. However, k may be an odd number such as 3 and 7. Furthermore, although the UV blocking layer is mainly composed of the above formula, a layer where particles such as ZnO particles or TiO₂ particles are mixed in the homologous zinc composite oxide particles according to the above formula may be used. Still furthermore, a particle diameter of ZnO that constitutes an oxide layer, a thickness of the oxide layer and a mixing ratio of In₂O₃ to ZnO as well, without being limited to ones described in the embodiments, can be appropriately combined.

## Claims

1. A UV blocking material, consisting essentially of homologous zinc composite oxide particles each expressed by a general formula: (ZnO)ₖIn₂O₃ (k is an odd number) and having a trigonal crystal structure.

2. The UV blocking material according to claim 1, **characterized in that** In of the homologous zinc composite oxide particles is partially substituted by any one of La, Ga and Al.

3. The UV blocking material according to claim 1 or 2, **characterized in that** the homologous zinc composite oxide particles are each surface-treated with an oxide of at least one kind of metal selected from Si, Al and Zr.

4. A UV blocking visible selectively transmitting filter, obtained by synthesizing the homologous zinc composite oxide particles according to claim 1 or 2 through a solid phase reaction of a Zn or In compound followed by grinding, and film-forming resultant particles using an inorganic or organic binder.

5. A light source, **characterized by** comprising:
a light-transmitting container;
a UV blocking layer that is made of a UV blocking material consisting essentially of homologous zinc composite oxide particles each expressed by a general formula: (ZnO)ₖIn₂O₃ (k is an odd number) and having a trigonal crystal structure and formed on an inner or outer surface of the light-transmitting container; and
luminous means disposed inside the container.

6. The light source according to claim 5, **characterized in that** particles made of ZnO particles, TiO₂ particles or a mixture thereof are blended in the UV blocking layer.

7. The light source according to claim 5, **characterized in that** k in the general formula: (ZnO)ₖIn₂O₃ of the UV blocking material is 5.

8. A visible selectively transmitting resin material, obtained by synthesizing the homologous zinc composite oxide particles according to claim 1 or 2 through a solid phase reaction of a Zn or In compound followed by grinding, and mixing resultant particles with resin followed by molding.

9. A lighting fixture, comprising the light source according to any one of claims 5 to 7.
